# EUROPEAN PATENT APPLICATION

(11) **EP 4 387 303 A1**
(43) Date of publication of application: **19.06.2024**
(21) Application number: 22855241.0
(22) Date of filing: 27.07.2022
(51) Int. Cl.: H04W 12/06

(54) **TERMINAL ACCESS METHOD AND APPARATUS, TERMINAL, AND STORAGE MEDIUM**

(30) Priority: 10.08.2021 CN 202110914994
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/108198
(87) International publication number: WO 2023/016258

(57) **Abstract**

The present disclosure provides a user terminal accessing method and apparatus, a user terminal, and a storage medium. A target relay user terminal receives a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal. Through the solution, it can be ensured that, when the user terminal needs to access the target relay user terminal, the target relay user terminal can correctly identify identity information of the user terminal requesting to access, and perform an operation corresponding to the identity of the user terminal, guaranteeing normal operation of a system.

## Description

This disclosure claims priority to Chinese Patent Application No. 202110914994.8, filed to the China National Intellectual Property Administration on August 10, 2021 and entitled "USER TERMINAL ACCESSING METHOD AND APPARATUS, USER TERMINAL, AND STORAGE MEDIUM", which is hereby incorporated by reference in its entirety.

### TECHNICAL FIELD

The present disclosure relates to the field of communication technology, and in particular to a user terminal accessing method and apparatus, a user terminal, and a storage medium.

### BACKGROUND

In a 5G NR (New Radio, New Radio) system, in order to expand coverage of a network, user-terminal-to-network-device relay UE-to-Network Relay and user-terminal-to-user-terminal relay UE-to-UE Relay are introduced. Among others, a relay user terminal (Relay UE) is a user terminal within network coverage, and a remote user terminal can be located within or outside the network coverage. For the UE-to-Network relay, the remote user terminal can access a network device through the relay user terminal; and for the UE-to-UE relay, the remote user terminal can access a target user terminal through the relay user terminal.

In current technology, only one-hop relay is supported, that is, the user terminal accesses the network device or the target user terminal through a one-hop relay user terminal. In the future, in order to support a more flexible network topology, multi-hop relay may be introduced. There is no clear solution currently regarding how to achieve establishment of relay connections in a multi-hop scenario.

### SUMMARY

The present application provides a user terminal accessing method and apparatus, a user terminal and a storage medium, for achieving establishment of relay connections in a multi-hop scenario.

In a first aspect, the present disclosure provides a user terminal accessing method, being applied to a target relay user terminal, including: receiving a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the user terminal accessing method further includes: performing, according to the identity identifier of the user terminal, a target operation corresponding to the identity identifier of the user terminal.

As an optional implementation, the connection establishment request message is a PC5 connection establishment request message, the PC5 connection establishment request message includes PC5-S signaling and/or PC5-RRC signaling.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

As an optional implementation, performing, according to the identity identifier of the user terminal, a target operation corresponding to the identity identifier of the user terminal, includes: in case of a determination that the user terminal is accessing the target relay user terminal using the identity of the remote user terminal, establishing, through the sidelink communication interface, a sidelink communication connection with the user terminal; and
in case of a determination that the user terminal is accessing the target relay user terminal using the identity of the relay user terminal, establishing a sidelink communication interface connection with the user terminal, and transmitting an indication message to at least one device of a target network device, a target remote user terminal, or a previous-hop relay user terminal, and/or establishing a sidelink communication interface connection with the user terminal and updating a self-own routing table;
where the indication information is used to indicate updating of a corresponding routing table by the target network device, the target remote user terminal, or the previous-hop relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the relay capacity indication information includes at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

As an optional implementation, the user terminal accessing method further includes: determining, according to the relay capacity indication information of the user terminal carried in the connection establishment request message, the relay working mode for the user terminal to use after accessing the target relay user terminal.

As an optional implementation, the user terminal accessing method further includes: transmitting to the user terminal a response message corresponding to the connection establishment request message, where the response message carries indication information to indicate the relay working mode for the user terminal to use after accessing the target relay user terminal.

As an optional implementation, the relay working mode includes at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

In a second aspect, an embodiment of the present disclosure provides a user terminal accessing method, being applied to a user terminal, including: transmitting a connection establishment request message to a target relay user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, before transmitting the connection establishment request message to the target relay user terminal through the sidelink communication interface, the user terminal accessing method further includes: determining the target relay user terminal according to the identity of the user terminal.

As an optional implementation, determining the target relay user terminal according to the identity of the user terminal, includes: when the user terminal is accessing the target relay user terminal using the identity of the remote user terminal, selecting one relay user terminal in relay user terminals satisfying a first preset condition to be the target relay user terminal; or, when the user terminal is accessing the target relay user terminal using the identity of the relay user terminal, selecting N relay user terminals in relay user terminals satisfying a second preset condition to be the target relay user terminal, where N is an integer greater than or equal to 1.

As an optional implementation, the second preset condition includes at least one of the following: a relay working mode supported by the user terminal includes a relay working mode being currently used by the target relay user terminal; or channel quality of the sidelink communication interface between the user terminal and a relay user terminal is higher than a preset threshold.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the user terminal accessing method further includes: receiving a relay discovery message broadcast by the target relay user terminal, where the relay discovery message carries a relay working mode of the target relay user terminal; and determining, according to the relay working mode of the target relay user terminal, the relay working mode for the user terminal to use after accessing the target relay user terminal.

As an optional implementation, the user terminal accessing method further includes: receiving a response message, transmitted by the target relay user terminal, corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

In a third aspect, an embodiment of the present disclosure provides a user terminal accessing apparatus, being applied to a target relay user terminal, including: a receiving module, configured to receive a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

In a fourth aspect, an embodiment of the present disclosure provides a user terminal accessing apparatus, being applied to a user terminal, including: a transmitting module, configured to transmit a connection establishment request message to a target relay user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

In a fifth aspect, an embodiment of the present disclosure provides a relay user terminal, including:
a memory, configured to store a computer program;
a transceiver, configured to receive or transmit data under control of a processor; and
the processor, configured to read the computer program in the memory and perform the following operation:
   receiving a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the processor is further configured to perform the following operation: performing, according to the identity identifier of the user terminal, a target operation corresponding to the identity identifier of the user terminal.

As an optional implementation, the connection establishment request message is a PC5 connection establishment request message, the PC5 connection establishment request message includes PC5-S signaling and/or PC5-RRC signaling.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

As an optional implementation, performing, according to the identity identifier of the user terminal, a target operation corresponding to the identity identifier of the user terminal, includes: in case of a determination that the user terminal is accessing the target relay user terminal using the identity of the remote user terminal, establishing, through the sidelink communication interface, a sidelink communication connection with the user terminal;
in case of a determination that the user terminal is accessing the target relay user terminal using the identity of the relay user terminal, establishing a sidelink communication interface connection with the user terminal, and transmitting an indication message to at least one device of a target network device, a target remote user terminal, or a previous-hop relay user terminal, and/or establishing a sidelink communication interface connection with the user terminal and updating a self-own routing table;
where the indication information is used to indicate updating of a corresponding routing table by the target network device, the target remote user terminal, or the previous-hop relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the processor is further configured to perform the following operation: determining, according to the relay capacity indication information of the user terminal carried in the connection establishment request message, the relay working mode for the user terminal to use after accessing the target relay user terminal.

As an optional implementation, the processor is further configured to perform the following operation: transmitting to the user terminal a response message corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

In a sixth aspect, an embodiment of the present disclosure provides a user terminal, including:
a memory, configured to store a computer program;
a transceiver, configured to receive or transmit data under control of a processor; and
the processor, configured to read the computer program in the memory and perform the following operation:
   transmitting a connection establishment request message to a target relay user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the processor is further configured to perform the following operation: determining the target relay user terminal according to the identity of the user terminal.

As an optional implementation, determining the target relay user terminal according to the identity of the user terminal, includes: when the user terminal is accessing the target relay user terminal using the identity of the remote user terminal, selecting one relay user terminal in relay user terminals satisfying a first preset condition to be the target relay user terminal; or, when the user terminal is accessing the target relay user terminal using the identity of the relay user terminal, selecting N relay user terminals in relay user terminals satisfying a second preset condition to be the target relay user terminal, where N is an integer greater than or equal to 1.

As an optional implementation, the second preset condition includes at least one of the following: a relay working mode supported by the user terminal includes a relay working mode being currently used by the target relay user terminal; or channel quality of the sidelink communication interface between the user terminal and a relay user terminal is higher than a preset threshold.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the processor is further configured to perform the following operation: receiving a relay discovery message broadcast by the target relay user terminal, where the relay discovery message carries a relay working mode of the target relay user terminal; and determining, according to the relay working mode of the target relay user terminal, the relay working mode for the user terminal to use after accessing the target relay user terminal.

As an optional implementation, the processor is further configured to perform the following operation: receiving a response message, transmitted by the target relay user terminal, corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

In a seventh aspect, an embodiment of the present disclosure provides a processor readable storage medium, storing thereon a computer program, where the computer program is configured to enable a processor to implement the user terminal accessing method according to the first aspect and/or the second aspect.

In an eighth aspect, a computer program product includes a computer program, where the computer program, when being executed by a processor, implements the user terminal accessing method according to the first aspect and/or the second aspect.

The present disclosure provides a user terminal accessing method and apparatus, a user terminal, and a storage medium. Receiving a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal. Through the solution, it can be ensured that, when the user terminal needs to access the target relay user terminal, the target relay user terminal can correctly identify identity information of the user terminal requesting to access, and perform an operation corresponding to the identity of the user terminal, guaranteeing normal operation of a system.

It should be understood that the content described in the foregoing summary section is neither intended to limit key or important features of embodiments of the present disclosure, nor is used to limit the scope of the present disclosure. Other features of the present disclosure will become readily comprehensible through the following description.

### BRIEF DESCRIPTION OF DRAWINGS

In order to describe the technical solutions in the present disclosure or the prior art more clearly, the following will briefly introduce the drawings that need to be used in the description of the embodiments or the prior art. Apparently, the drawings in the following description are for some embodiments of the present disclosure. For those of ordinary skill in the art, other drawings may be obtained based on these drawings without creative efforts.
FIG. 1 is a schematic diagram of an application scenario of a user terminal accessing method in a prior art.
FIG. 2 is a schematic diagram of an application scenario of a user terminal accessing method according to an embodiment of the present disclosure.
FIG. 3 is a first schematic diagram of signaling interactions of a user terminal accessing method according to an embodiment of the present disclosure.
FIG. 4 is a second schematic diagram of signaling interactions of a user terminal accessing method according to an embodiment of the present disclosure.
FIG. 5 is a third schematic diagram of signaling interactions of a user terminal accessing method according to an embodiment of the present disclosure.
FIG. 6 is a first schematic structural diagram of a user terminal accessing apparatus according to an embodiment of the present disclosure.
FIG. 7 is a second schematic structural diagram of a user terminal accessing apparatus according to an embodiment of the present disclosure.
FIG. 8 is a schematic structural diagram of a relay user terminal according to an embodiment of the present disclosure.
FIG. 9 is a schematic structural diagram of a user terminal according to an embodiment of the present disclosure.

### DESCRIPTION OF EMBODIMENTS

The term "and/or" in the present disclosure describes an association relationship of associated objects, indicating that there can be three relationships, for example, A and/or B can indicate that A exists alone, A and B exist at the same time, and B exists alone. The character "/" generally indicates that the context objects are in an "or" relationship. In the present disclosure, the term "a plurality of' refers to two or more, other quantifiers are similar thereto.

The technical solutions according to the embodiments of the present disclosure will be described hereunder clearly and comprehensively in conjunction with the accompanying drawings in the embodiments of the present disclosure. Apparently, the described embodiments are merely some of, rather than all of the embodiments of the present disclosure. Based on the embodiments in the present disclosure, all other embodiments obtained by those of ordinary skill in the art without creative efforts shall fall within the protection scope of present disclosure.

In a 5G NR (New Radio, new radio) system, in order to expand coverage of a network, user terminal-to-network-device relay UE-to-Network Relay and user terminal-to-user terminal relay UE-to-UE Relay are introduced. Among others, a relay user terminal (Relay UE) is a user terminal within network coverage, and a remote user terminal can be located within or outside the network coverage. For the UE-to-Network relay, the remote user terminal can access a network device through the relay user terminal; and for the UE-to-UE relay, the remote user terminal can access a target user terminal through the relay user terminal.

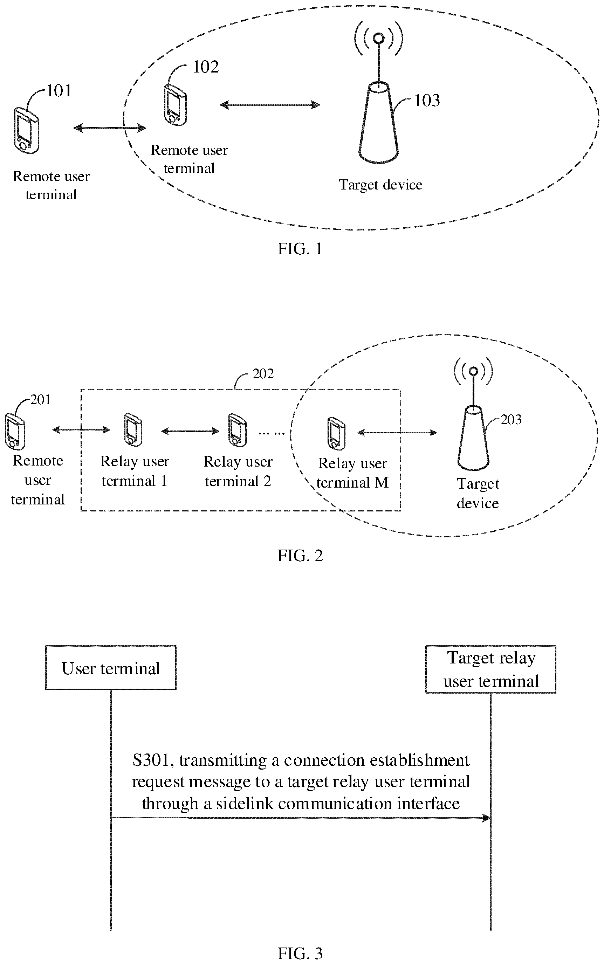

FIG. 1 is schematic diagram an application scenario of a user terminal accessing method in a prior art. As shown in FIG. 1, included in the scenario are: a remote user terminal 101, a relay user terminal 102, and a target device 103.

In a practical application, the target device 103 can be a network device, for example, a base station or the like; or it can also be another user terminal device, for example, another remote user terminal. In FIG. 1, illustration is made by taking the base station as an example, but limitation is not made thereto.

The relay user terminal 102 is within a communication range of the target device 103, and the remote user terminal 101 is outside a communication range of the target device 103. In order to communicate with the target device 103, the remote user terminal 101 can rely on the relay user terminal 102 to forward relevant data, thereby achieving data transmission with the target device 103.

In current technology, only one-hop relay is supported, that is, the remote user terminal 101 accesses a network device or a target user terminal through one-hop relay user terminal. In the future, in order to support a more flexible network topology, multi-hop relay may be introduced. However, there is no clear solution currently regarding how to achieve establishment of relay connections in a multi-hop scenario.

Considering that in a multi-hop relay scenario, a target relay user terminal behaves differently when a regular remote user terminal is accessing the target relay user terminal and when a user terminal that is expected to work as a relay is accessing the target relay user terminal. Therefore, it is necessary to consider an enhancement mechanism to ensure that the target relay user terminal can identify an identity of a user terminal requesting to access, so as to perform different operations according to the identity of the user terminal requesting to access.

Therefore, in order to solve the above problem, the embodiments of the present disclosure provide a user terminal accessing method and apparatus, a user terminal and a storage medium. According to the method, when a user terminal is accessing a target relay user terminal, a connection establishment request message carries an identity identifier of the user terminal therein, to ensure that the target relay user terminal can correctly identify identity information of the user terminal requesting to access, and perform an operation corresponding to the identity of the user terminal, guaranteeing normal operation of a system.

FIG. 2 is a schematic diagram of an application scenario of a user terminal accessing method according to an embodiment of the present disclosure. As shown in FIG. 2, included in the scenario are: a remote user terminal 201, relay user terminals 202 (which are illustrated in the figure with a relay user terminal 1, a relay user terminal 2, ...and a relay user terminal M as an example, where M is an integer greater than 1), and a target device 203.

In a practical application, the target device 203 can be a network device, for example, a base station or the like; or it can also be another user terminal device, for example, another remote user terminal. In FIG. 2, illustration is made by taking the base station as an example, but limitation is not made thereto.

In addition, each of the remote user terminal 201 and the relay user terminals 202 aforementioned can refer to a device that provides voice and/or data connectivity to a user, a handheld device with a wireless connectivity function, or other processing devices connected to a wireless modem.

In different systems, the aforementioned user terminal may vary in name. For example, in a 5G system, the aforementioned user terminal can be referred to as a user equipment (user equipment, UE). The aforementioned user terminal can also be a wireless terminal, where the wireless terminal can communicate with one or more core networks (Core Networks, CN) through a radio access network (Radio Access Network, RAN). The wireless terminal can be a mobile terminal such as a mobile phone (or referred to as a "cellular" phone) and a computer with a mobile terminal, for example, it can be a mobile device which is portable, pocket-sized, handheld, built-in a computer or vehicle-mounted, and exchanges voice and/or data with the radio access network, for example, a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or the like. The wireless terminal can also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), a user device (user device), which is not limited in the embodiments of the present disclosure.

The technical solutions provided in the embodiments of the present disclosure can be applied to various systems, especially a 5G system. For example, an applicable system can be a global system of mobile communication (global system of mobile communication, GSM), a code division multiple access (code division multiple access, CDMA) system, a wideband code division multiple access (Wideband Code Division Multiple Access, WCDMA) general packet radio service (general packet radio service, GPRS) system, a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX), a 5G new radio (New Radio, NR) system, and so on. Each of these various systems includes therein the user terminal(s) and the network device(s). The system also includes a core network part such as an evolved packet system (Evolved Packet System, EPS), a 5G System (5GS) or the like.

It should be understood that the aforementioned FIG. 2 is only illustrative, and the aforementioned scenario may further include other network devices therein, for example, a wireless relay device and a wireless backhaul device can be further included, which are not shown in FIG. 2.

It should be noted that the method and apparatus according to the embodiments of the present disclosure are based on a same inventive concept. Since the problem-solving principles for the method and the apparatus are similar, cross reference can be made between the implementations of the apparatus and the method, and repetitions will not be elaborated.

FIG. 3 is a schematic flowchart of a user terminal accessing method according to an embodiment of the present disclosure. As shown in FIG. 3, the user terminal accessing method may include the steps as follows.

S301, a user terminal transmits a connection establishment request message to a target relay user terminal through a sidelink communication interface.

The connection establishment request message is used to request for establishment of a sidelink communication connection with the target relay user terminal. The connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

A specific interpretation of the identity of the relay user terminal is that the user terminal is expected to work in a manner as a relay user terminal after accessing the target relay user terminal.

As an example, with reference to FIG. 2, if the user terminal is the remote user terminal 201, the target relay user terminal is the relay user terminal 1, and the identity identifier is used to indicate whether the remote user terminal 201 is accessing the relay user terminal 1 using an identity of a remote user terminal, or accessing the relay user terminal 1 using an identity of a relay user terminal. The meaning of accessing the relay user terminal 1 using an identity of a relay user terminal is that the remote user terminal 201 will turn on a relay function after accessing the relay user terminal 1 and work as a relay user terminal.

Correspondingly, the target relay user terminal receives the connection establishment request message transmitted by the user terminal through the sidelink communication interface.

Furthermore, the target relay user terminal obtains the identity identifier in the connection establishment request message and performs a corresponding operation according to the identity identifier. The specific implementation method will be shown in the following embodiments.

In the user terminal accessing method according to the present disclosure, the user terminal transmits the connection establishment request message to the target relay user terminal through the sidelink communication interface, and the target relay user terminal receives the connection establishment request message transmitted by the user terminal through the sidelink communication interface. Since the connection establishment request message carries the identity identifier of the user terminal, the relay user terminal can perform a corresponding operation according to the identity identifier of the user terminal requesting to access, it can be ensured that, when the user terminal needs to access the target relay user terminal, the target relay user terminal can correctly identify identity information of the user terminal requesting to access, and perform an operation corresponding to the identity of the user terminal, guaranteeing normal operation of a system.

In some embodiments, the connection establishment request message may be a PC5 connection establishment request message, where the PC5 connection establishment request message may be PC5-S signaling and/or PC5-RRC signaling.

In some other embodiments, the identity identifier of the user terminal may be carried in the connection establishment request message in an explicit or implicit manner.

In an aspect, the identity identifier of the user terminal being carried in the connection establishment request message in the explicit manner, includes:
the connection establishment request message carrying indication information to indicate, through a value of the indication information, that the user terminal is accessing the target relay user terminal using the identity of the remote user terminal, or accessing the target relay user terminal using the identity of the relay user terminal.

As an example, when the value of indication information (for example, 1 bit) carried in the connection establishment request message is 0, it represents that the user terminal is accessing the target relay user terminal using an identity of a remote user terminal; when the value of this bit of indication information is 1, it represents that the user terminal is accessing the target relay user terminal using an identity of a relay user terminal.

In another aspect, the identity identifier of the user terminal being carried in the connection establishment request message in the implicit manner, includes:
the connection establishment request message selectively carrying indication information to indicate, through whether carrying the indication information, that the user terminal is accessing the relay user terminal using the identity of the remote user terminal, or accessing the target relay user terminal using the identity of the relay user terminal.

As an example, the connection establishment request message selectively carries indication information (for example, 1 bit), when the connection establishment request message carries the 1-bit indication information, it represents that the user terminal is accessing the target relay user terminal using an identity of a relay user terminal; when the connection establishment request message does not carry the 1-bit indication information, it represents that the user terminal is accessing the target relay user terminal using an identity of a remote user terminal.

It should be noted that the aforementioned schemes of carrying indication information in explicit and implicit manners are illustrative, and other similar manners will not be elaborated here in detail.

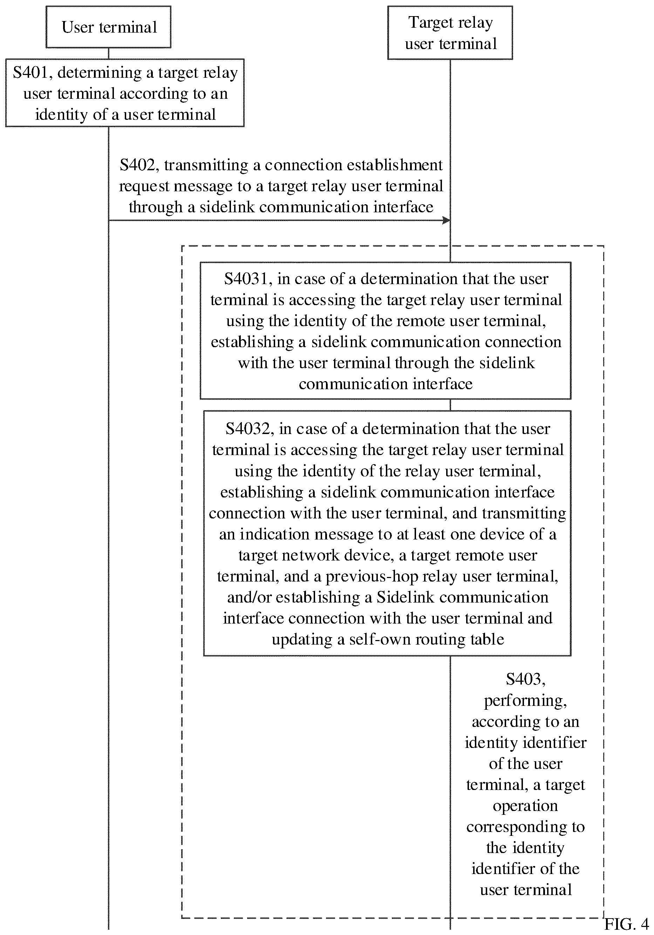

FIG. 4 is a second schematic diagram of signaling interactions of a user terminal accessing method according to an embodiment of the present disclosure. As shown in FIG. 4, the user terminal accessing method according to the embodiment of the present disclosure may include the steps as follows.

S401, a user terminal determines a target relay user terminal according to an identity of a user terminal.

It should be understood that, for a user terminal using an identity of a remote user terminal and a user terminal using an identity of a relay user terminal, different approaches are used to determine the target relay user terminal, which will be explained respectively in the following with reference to specific embodiments.
(1) When the user terminal is accessing the target relay user terminal using an identity of a remote user terminal, select one relay user terminal in relay user terminals satisfying a first preset condition to be the target relay user terminal.

In a practical application, regarding the first preset condition, it is not limited in the embodiments of the present disclosure. For example, the first preset condition can be determined based on an AS layer criterion and/or a NAS criterion.

Illustratively, take an example where the first preset condition is an AS layer criterion, the first preset condition can be that channel quality of the sidelink communication interface is greater than a preset threshold. Namely, the user terminal determines channel quality (for example, an SD-RSRP) of a sidelink communication interface between the user terminal and each candidate relay user terminal measured by the user terminal, and then the user terminal uniquely selects one relay user terminal to be the target relay user terminal, from those satisfying the channel quality condition of the sidelink communication interface (i.e., greater than the preset threshold).

In some other embodiments, a NAS layer relay selection criterion can also be used to determine whether a candidate relay user terminal satisfies the first preset condition, and then the user terminal selects one relay user terminal to be the target relay user terminal from candidate relay user terminals satisfying the first preset condition. Regarding the content of the NAS relay selection criterion, it is not specifically limited in the embodiments of the present disclosure.

(2) When the user terminal is accessing the target relay user terminal using an identity of a relay user terminal, select N relay user terminals in relay user terminals satisfying a second preset condition to be the target relay user terminal, where N is an integer greater than or equal to 1.

The second preset condition includes at least one of the following:
a relay working mode supported by the user terminal includes a relay working mode being currently used by the target relay user terminal; or
channel quality of the sidelink communication interface between the user terminal and a relay user terminal is higher than a preset threshold.

S402, the user terminal transmits a connection establishment request message to the target relay user terminal through a sidelink communication interface.

It should be understood that, for an implementation and a beneficial effect of step S402, they are similar to those of step S301 in the embodiment as shown in FIG. 3, specific reference can be made to the foregoing embodiment. Therefore, it will not be repeated here.

S403, the target relay user terminal performs, according to identity identifier of the user terminal, a target operation corresponding to the identity identifier of the user terminal.

In the following, detailed descriptions of the target operations corresponding to the two kinds of identities of the user terminal will be given with reference to steps S4031-S4032.

S4031, in case of a determination that the user terminal is accessing the target relay user terminal using an identity of a remote user terminal, the target relay user terminal establishes a sidelink communication interface connection with the user terminal.

S4032, in case of a determination that the user terminal is accessing the target relay user terminal using an identity of a relay user terminal, the relay user terminal, in addition to establishing a sidelink communication interface connection with the user terminal, further needs to transmit an indication message to at least one device of a target network device, a target remote user terminal, or a previous-hop relay user terminal, and/or establishes a sidelink communication interface connection with the user terminal and updates a self-own routing table.

The indication information is used to indicate updating of a corresponding routing table by the target network device, the target remote user terminal, or the previous-hop relay user terminal.

Illustratively, with reference to FIG. 2, take an example where the target relay user terminal is the relay user terminal 1, the target network device and the target remote user terminal are the target device 203 as shown in FIG. 2.

In this step, the user terminal transmits the connection establishment request message to the relay user terminal 1, the carried identity identifier of the user terminal indicates that the user terminal is a relay user terminal. After the relay user terminal 1 determines, according to the identity identifier, that the identity of the user terminal is a relay user terminal, the relay user terminal 1 will transmit the indication information to the target device 203, as an optional implementation, it will also transmit the indication information to other relay user terminals, such as the relay user terminal 2, the relay user terminal M, or the like. Thereby, it can be permitted that the target device 203 and/or the relay user terminal 2, the relay user terminal M, etc. can update routing information.

In some embodiments, when the user terminal is accessing the target relay user terminal using an identify of a relay user terminal, the connection establishment request message further carries relay capacity indication information of the user terminal, and/or a relay working mode for the user terminal to use after accessing the target relay user terminal.

Each of the relay working mode and the relay capacity indication information includes at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

In the embodiments of the present disclosure, the target relay user terminal can perform different operations according to the identity of the accessing user terminal, thus it can be ensured that, when the user terminal needs to access the target relay user terminal, the target relay user terminal can correctly identify identity information of the user terminal requesting to access, and perform an operation corresponding to the identity of the user terminal, guaranteeing normal operation of a system.

In the following, a specific implementation will be described with reference to specific embodiments when the user terminal is accessing the target relay user terminal using an identity of a relay user terminal.

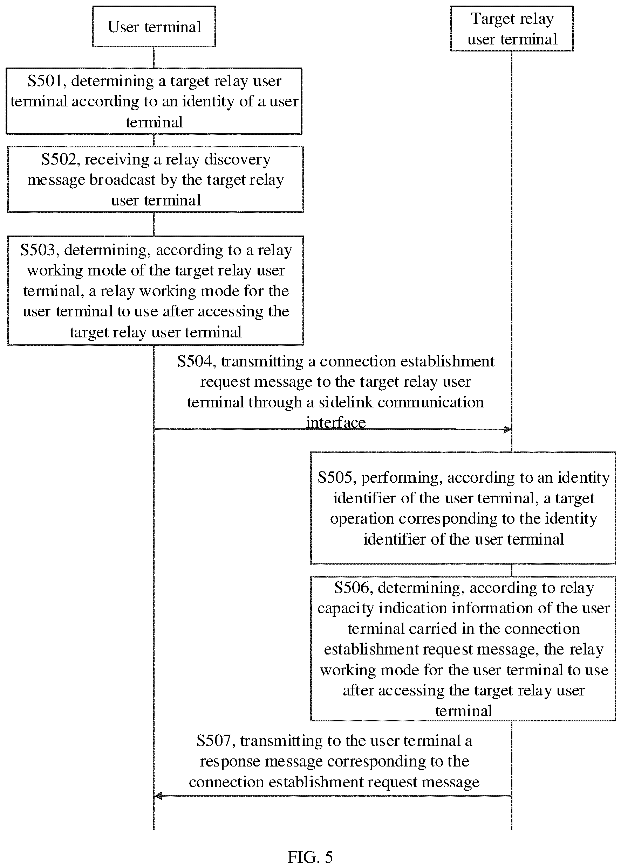

FIG. 5 is a third schematic diagram of signaling interactions of a user terminal accessing method according to an embodiment of the present disclosure. As shown in FIG. 5, the user terminal accessing method according to the embodiment of the present disclosure includes the steps as follows.

S501, a user terminal determines a target relay user terminal according to an identity of the user terminal.

Step 501 is similar to step S401 in the embodiment as shown in FIG. 4, which will not be repeated here.

S502, the user terminal receives a relay discovery message broadcast by the target relay user terminal.

The relay discovery message carries a relay working mode of the target relay user terminal.

S503, the user terminal determines, according to a relay working mode of the target relay user terminal, a relay working mode for the user terminal to use after accessing the target relay user terminal.

S504, the user terminal transmits a connection establishment request message to the target relay user terminal through a sidelink communication interface.

The connection establishment request message further carries relay capacity indication information of the user terminal, and/or the relay working mode for the user terminal to use after accessing the target relay user terminal.

S505, the target relay user terminal performs, according to identity identifier of the user terminal, a target operation corresponding to the identity identifier of the user terminal.

Steps 505 to 505 are similar to steps 402- 403 in the embodiment as shown in FIG. 4, which will not be repeated here.

S506, the target relay user terminal determines, according to the relay capacity indication information of the user terminal carried in the connection establishment request message, the relay working mode for the user terminal to use after accessing the target relay user terminal.

S507, the target relay user terminal transmits to the user terminal a response message corresponding to the connection establishment request message.

The response message carries indication information to indicate the relay working mode for the user terminal to use after accessing the target relay user terminal.

Correspondingly, the user terminal receives the response message, transmitted by the target relay user terminal, corresponding to the connection establishment request message, and obtains, as indicated in the response message, the relay working mode for the user terminal to use after accessing the target relay user terminal, so that the user terminal operates based on the relay working mode after accessing the target access user terminal.

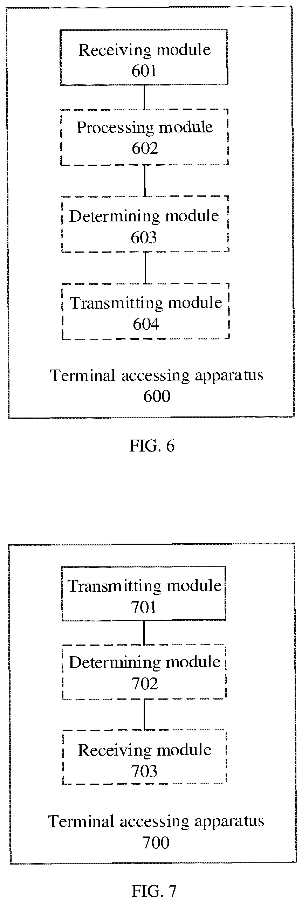

On a target relay user terminal side, an embodiment of the present disclosure provides a user terminal accessing apparatus, being applied to a target relay user terminal. FIG. 6 is a schematic structural diagram of a user terminal accessing apparatus according to an embodiment of the present disclosure. As shown in FIG. 6, the user terminal accessing apparatus 600 includes:
a receiving module 601, configured to receive a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the user terminal accessing apparatus 600 further includes: a processing module 602, configured to perform, according to the identity identifier of the user terminal, a target operation corresponding to the identity identifier of the user terminal.

As an optional implementation, the connection establishment request message is a PC5 connection establishment request message, the PC5 connection establishment request message includes PC5-S signaling and/or PC5-RRC signaling.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

As an optional implementation, the processing module 602 is specifically configured to, in case of a determination that the user terminal is accessing the target relay user terminal using the identity of the remote user terminal, establish a sidelink communication interface connection between the target relay user terminal and the user terminal;
in case of a determination that the user terminal is accessing the target relay user terminal using the identity of the relay user terminal, establish a sidelink communication interface connection between the target relay user terminal and the user terminal, and transmit an indication message to at least one device of a target network device, a target remote user terminal, or a previous-hop relay user terminal, and/or establish a sidelink communication interface connection between the target relay user terminal and the user terminal and update a self-own routing table;
where the indication information is used to indicate updating of a corresponding routing table by the target network device, the target remote user terminal, or the previous-hop relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the user terminal accessing apparatus 600 further includes: a determining module 603, configured to determine, according to the relay capacity indication information of the user terminal carried in the connection establishment request message, the relay working mode for the user terminal to use after accessing the target relay user terminal.

As an optional implementation, the user terminal accessing apparatus 600 further includes: a transmitting module 604, configured to transmit to the user terminal a response message corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

It should be noted that the aforementioned user terminal accessing apparatus according to the present disclosure can accordingly implement all of the method steps implemented by the target relay user terminal in the foregoing method embodiments, and achieve a same technical effect. Same contents and beneficial effects of this embodiment as those of the method embodiments will not be specifically elaborated here.

On a user terminal side, an embodiment of the present disclosure provides a user terminal accessing apparatus, being applied to a user terminal. FIG. 7 is a second schematic structural diagram of a user terminal accessing apparatus according to an embodiment of the present disclosure. As shown in FIG. 7, the user terminal accessing apparatus 700 includes:
a transmitting module 701, configured to transmit a connection establishment request message to a target relay user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the user terminal accessing apparatus 700 further includes: a determining module 702, configured to determine the target relay user terminal according to the identity of the user terminal.

As an optional implementation, the determining module 702 is specifically configured to, when the user terminal is accessing the target relay user terminal using the identity of the remote user terminal, select one relay user terminal in relay user terminals satisfying a first preset condition to be the target relay user terminal; or, when the user terminal is accessing the target relay user terminal using the identity of the relay user terminal, select N relay user terminals in relay user terminals satisfying a second preset condition to be the target relay user terminal, where N is an integer greater than or equal to 1.

As an optional implementation, the second preset condition includes at least one of the following: a relay working mode supported by the user terminal includes a relay working mode being currently used by the target relay user terminal; or channel quality of the sidelink communication interface between the user terminal and a relay user terminal is higher than a preset threshold.

As an optional implementation, the identity identifier of the user terminal is carried in the connection establishment request message in an explicit or implicit manner.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the user terminal accessing apparatus 700 further includes: a receiving module 703, configured to receive a relay discovery message broadcast by the target relay user terminal, where the relay discovery message carries a relay working mode of the target relay user terminal; and the determining module 702 is further configured to determine, according to the relay working mode of the target relay user terminal, the relay working mode for the user terminal to use after accessing the target relay user terminal.

As an optional implementation, the receiving module 703 is further configured to receive a response message, transmitted by the target relay user terminal, corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

It should be noted that the aforementioned user terminal accessing apparatus according to the present disclosure can accordingly implement all of the method steps implemented by the user terminal in the foregoing method embodiments, and achieve a same technical effect. Same contents and beneficial effects of this embodiment as those of the method embodiments will not be specifically elaborated here.

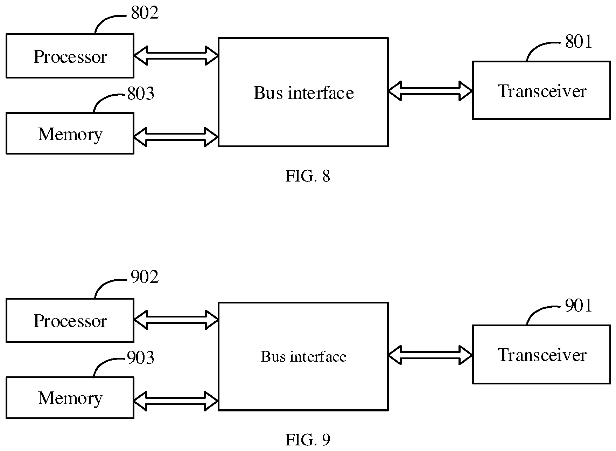

FIG. 8 is a schematic structural diagram of a relay user terminal according to an embodiment of the present disclosure. The relay user terminal is a target relay user terminal, as shown in FIG. 8, the target relay user terminal includes: a transceiver 801, a processor 802 and a memory 803.

The memory 803 is configured to store a computer program.

The transceiver 801 is configured to receive or transmit data under control of the processor 802.

In FIG. 8, a bus architecture can include any number of interconnected buses and bridges, linking various circuits of one or multiple processors represented by the processor 802 and a memory represented by the memory 803. The bus architecture can also link various other circuits such as a peripheral device, a voltage regulator, a power management circuit or the like, which are well known in the field and thus are not further described herein. A bus interface provides an interface. The transceiver 801 can be of multiple components, namely, includes a transmitter and a receiver, providing units for communicating with various other devices on transmission media including a transmission medium such as a wireless channel, a wired channel, an optical cable or the like. The processor 802 is responsible for managing the bus architecture and general processing, and the memory 803 can store data used by the processor 802 in an operation.

The processor 802 is responsible for managing the bus architecture and general processing, and the memory 803 can store data used by the processor 802 in an operation.

As an optional implementation, the processor 802 can be a central processing unit (central processing unit, CPU), an application specific integrated circuit (application specific integrated circuit, ASIC), a field programmable gate array (field programmable gate array, FPGA), or a complex programmable logic device (complex programmable logic device, CPLD). The processor can also adopt a multi-core architecture.

The processor 802 is configured to, by calling a computer program stored in the memory 803, implement, based on an obtained executable instruction, any user terminal accessing method related to the target relay user terminal according to the embodiments of the present disclosure. The processor 802 and the memory 803 can also be arranged physically separated.

Specifically, the processor 802 is configured to read the computer program in the memory 803 and perform the following operations: receiving a connection establishment request message transmitted by a user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the processor 802 is further configured to perform the following operation: performing, according to the identity identifier of the user terminal, a target operation corresponding to the identity identifier of the user terminal.

As an optional implementation, the connection establishment request message is a PC5 connection establishment request message, the PC5 connection establishment request message includes PC5-S signaling and/or PC5-RRC signaling.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

As an optional implementation, performing, according to the identity identifier of the user terminal, the target operation corresponding to the identity identifier of the user terminal, includes: in case of a determination that the user terminal is accessing the target relay user terminal using the identity of the remote user terminal, establishing, through the sidelink communication interface, a sidelink communication connection with the user terminal.

As an optional implementation, performing, according to the identity identifier of the user terminal, the target operation corresponding to the identity identifier of the user terminal, includes:
in case of a determination that the user terminal is accessing the target relay user terminal using the identity of the relay user terminal, establishing a sidelink communication interface connection between the target relay user terminal and the user terminal, and transmitting an indication message to at least one device of a target network device, a target remote user terminal, or a previous-hop relay user terminal, and/or establishing a sidelink communication interface connection between the target relay user terminal and the user terminal and updating a self-own routing table;
where the indication information is used to indicate updating of a corresponding routing table by the target network device, the target remote user terminal, or the previous-hop relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the processor 802 is further configured to perform the following operation: determining, according to the relay capacity indication information of the user terminal carried in the connection establishment request message, the relay working mode for the user terminal to use after accessing the target relay user terminal.

As an optional implementation, the processor 802 is further configured to perform the following operation: transmitting to the user terminal a response message corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

It should be noted that the aforementioned relay user terminal according to the present disclosure can implement all of the method steps implemented by the target relay user terminal in the foregoing method embodiments, and achieve a same technical effect. Same contents and beneficial effects of this embodiment as those of the method embodiments will not be specifically elaborated here.

FIG. 9 is a schematic structural diagram of a user terminal according to an embodiment of the present disclosure. As shown in FIG. 9, the user terminal includes: a transceiver 901, a processor 902 and a memory 903.

The memory 903 is configured to store a computer program.

The transceiver 901 is configured to receive or transmit data under control of the processor 902.

In FIG. 9, a bus architecture can include any number of interconnected buses and bridges, linking various circuits of one or multiple processors represented by the processor 902 and a memory represented by the memory 903. The bus architecture can also link various other circuits such as a peripheral device, a voltage regulator, a power management circuit or the like, which are well known in the field and thus are not further described herein. A bus interface provides an interface. The transceiver 901 can be of multiple components, namely, includes a transmitter and a receiver, providing units for communicating with various other devices on transmission media including a transmission medium such as a wireless channel, a wired channel, an optical cable or the like. The processor 902 is responsible for managing the bus architecture and general processing, and the memory 903 can store data used by the processor 902 in an operation.

The processor 902 is responsible for managing the bus architecture and general processing, and the memory 903 can store data used by the processor 902 in an operation.

As an optional implementation, the processor 902 can be a central processing unit (central processing unit, CPU), an application specific integrated circuit (application specific integrated circuit, ASIC), a field programmable gate array (field programmable gate array, FPGA), or a complex programmable logic device (complex programmable logic device, CPLD). The processor can also adopt a multi-core architecture.

The processor 902 is configured to, by calling a computer program stored in the memory 903, implement, based on an obtained executable instruction, any user terminal accessing method related to the target relay user terminal according to the embodiments of the present disclosure. The processor 902 and the memory 903 can also be arranged physically separated.

Specifically, the processor 902 is configured to read the computer program in the memory 903 and perform the following operation:
transmitting a connection establishment request message to a target relay user terminal through a sidelink communication interface, where the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

As an optional implementation, the processor 902 is further configured to perform the following operation: determining the target relay user terminal according to the identity of the user terminal.

As an optional implementation, determining the target relay user terminal according to the identity of the user terminal, includes: when the user terminal is accessing the target relay user terminal using the identity of the remote user terminal, selecting one relay user terminal in relay user terminals satisfying a first preset condition to be the target relay user terminal; or, when the user terminal is accessing the target relay user terminal using the identity of the relay user terminal, selecting N relay user terminals in relay user terminals satisfying a second preset condition to be the target relay user terminal, where N is an integer greater than or equal to 1.

As an optional implementation, the second preset condition includes at least one of the following: a relay working mode supported by the user terminal includes a relay working mode being currently used by the target relay user terminal; or channel quality of the sidelink communication interface between the user terminal and a relay user terminal is higher than a preset threshold.

As an optional implementation, the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

As an optional implementation, when the user terminal is accessing the target relay user terminal using the identity of the relay user terminal, the connection establishment request message further carries relay capacity indication information of the user terminal, and/or a relay working mode for the user terminal to use after accessing the target relay user terminal.

As an optional implementation, the processor 902 is further configured to perform the following operation: receiving a relay discovery message broadcast by the target relay user terminal, where the relay discovery message carries a relay working mode of the target relay user terminal; and determining, according to the relay working mode of the target relay user terminal, the relay working mode for the user terminal to use after accessing the target relay user terminal.

As an optional implementation, the processor 902 is further configured to perform the following operation: receiving a response message, transmitted by the target relay user terminal, corresponding to the connection establishment request message, where the response message carries indication information to indicate the relay working mode for the user terminal to use after accessing the target relay user terminal.

As an optional implementation, the relay working mode includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

As an optional implementation, the relay capacity indication information includes at least one of the following: Layer 2 relay L2 relay; Layer 3 relay L3 relay; Layer 2 user terminal to network device relay L2 U2N relay; Layer 2 user terminal to user terminal relay L2 U2U relay; Layer 3 user terminal to network device relay L3 U2N relay; or Layer 3 user terminal to user terminal relay L3 U2U relay.

It should be noted that the aforementioned user terminal according to the present disclosure can implement all of the method steps implemented by the user terminal side in the foregoing method embodiments, and achieve a same technical effect. Same contents and beneficial effects of this embodiment as those of the method embodiments will not be specifically elaborated here.

It should be noted that, in the embodiments of the present disclosure, the partition of the units, being illustrative, is only a logical function partition, and there may be other manners for partition in an actual implementation. In addition, respective functional units in the embodiments of the present disclosure may be integrated into a processing unit, or may exist alone physically, or two or more units may be integrated into one unit. The aforementioned integrated unit can be implemented in a form of hardware, or it can also be implemented in a form of a software function unit.

The aforementioned integrated unit may be stored in a processor readable storage medium if being implemented in the form of a software functional unit and sold or used as a standalone product. Based on such understanding, the technical solutions of the present disclosure, substantively, or a part of which that makes a contribution to the prior art, or the whole or a part of which, may be embodied in the form of a software product which is stored in a storage medium, where a plurality of instructions are included to cause a computer device (which can be a personal computer, a server, a network device, etc.) or a processor (processor) to execute all or part of the steps of the methods according to the various embodiments of the present disclosure. The aforementioned storage medium includes: a USB flash disk, a mobile hard disk, a read-only memory (Read-Only Memory, ROM), a random access memory (Random Access Memory, RAM), a magnetic disk or an optical disk, or other media that can store program codes.

Regarding the relay user terminal side, an embodiment of the present disclosure provides a processor readable storage medium storing thereon a computer program, where the computer program is configured to enable the processor to implement all of the method steps implemented by the target relay user terminal in the foregoing method embodiments, and achieve a same technical effect. Same contents and beneficial effects of this embodiment as those of the method embodiments will not be specifically elaborated here.

Regarding the user terminal side, an embodiment of the present disclosure provides a processor readable storage medium storing thereon a computer program, where the computer program is configured to enable the processor to implement all of the method steps implemented by the user terminal in the foregoing method embodiments, and achieve a same technical effect. Same contents and beneficial effects of this embodiment as those of the method embodiments will not be specifically elaborated here.

The processor readable storage medium can be any available medium or data storage device that the processor can access, including but not limited to a magnetic memory (such as a floppy disk, a hard drive, a magnetic tape, a magneto-optical disk (MO), etc.), an optical memory (such as a CD, a DVD, a BD, an HVD, etc.), as well as a semiconductor memory (such as a ROM, an EPROM, an EEPROM, a non-volatile memory (NAND FLASH), a solid-state drive (SSD), etc.).

Regarding the relay user terminal side, an embodiment of the present disclosure further provides a computer program product containing an instruction, where a computer program is stored in a storage medium, and at least one processor can read the computer program from the storage medium. The at least one processor, when executing the computer program, is enabled to implement all of the method steps implemented by the target relay user terminal in the foregoing method embodiments, and achieve a same technical effect. Same contents and beneficial effects of this embodiment as those of the method embodiment swill not be specifically elaborated here.

Regarding the user terminal side, an embodiment of the present disclosure further provides a computer program product containing an instruction, where a computer program is stored in a storage medium, and at least one processor can read the computer program from the storage medium. The at least one processor, when executing the computer program, is enabled to implement all of the method steps implemented by the user terminal in the foregoing method embodiments, and achieve a same technical effect. Same contents and beneficial effects of this embodiment as those of the method embodiments will not be specifically elaborated here.

An embodiment of the present disclosure further provides a communication system, including a target relay user terminal and a user terminal. The target relay user terminal can implement all of the method steps implemented by the target relay user terminal side in the foregoing method embodiments and achieve a same technical effect. And the user terminal can implement all of the method steps implemented by the user terminal side in the foregoing method embodiments and achieve a same technical effect. Same contents and beneficial effects of this embodiment as those of the method embodiments will not be specifically elaborated here.

Those skilled in the art should understand that the embodiments of the present disclosure can be provided as a method, a system, or a computer program product. Therefore, the present disclosure can adopt the form of a complete hardware embodiment, a complete software embodiment, or an embodiment combining software and hardware aspects. Moreover, the disclosure can adopt the form of a computer program product implemented on one or more computer-usable storage media (including but not limited to a magnetic disk storage and an optical storage) containing computer-usable program codes therein.

The present disclosure is described with reference to schematic diagrams of signaling interactions and/or block diagrams of the method, device and computer program product according to the embodiments of the present disclosure. It should be understood that each flow and/or block in the flowchart and/or block diagram, and combinations of the flows and/or blocks in the flowchart and/or block diagram can be implemented by the computer program instructions. These computer executable instructions can be provided to a processor of a general-purpose computer, a special-purpose computer, an embedded processor or other programmable data processing device to produce a machine, such that the instructions executed by the processor of the computer or other programmable data processing device produce means for implementing the functions specified in one or more flows in the schematic diagrams of signaling interactions and/or one or more blocks in the block diagrams.

These processor executable instructions may also be stored in a processor-readable memory that can direct a computer or other programmable data processing device to function in a particular manner, such that the instructions stored in the processor-readable memory produce an article of manufacture including instruction means that implement the functions specified in one or more flows in the schematic diagrams of signaling interactions and/or one or more blocks in the block diagram.

These computer program instructions may also be loaded onto a computer or other programmable data processing devices, such that a series of operational steps are performed on the computer or other programmable devices to produce a computer-implemented process, such that the instructions executed on the computer or other programmable devices provide steps for implementing the functions specified in one or more flows in the schematic diagrams of signaling interactions and/or one or more blocks in the block diagram.

Apparently, various modifications and variations can be made to the embodiments of the present disclosure by those skilled in the art without departing from the spirit and scope of the present disclosure. Thus, if these modifications and variations of the present disclosure are within the scope of the claims of the present disclosure and their technical equivalents, the present disclosure is also intended to include these modifications and variations.

## Claims

1. A user terminal accessing method, **characterized by**: being applied to a target relay user terminal, and comprising:
receiving a connection establishment request message transmitted by a user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

2. The method according to claim 1, further comprising:
performing, according to the identity identifier of the user terminal, a target operation corresponding to the identity identifier of the user terminal.

3. The method according to claim 1, wherein the connection establishment request message is a PC5 connection establishment request message, the PC5 connection establishment request message comprises PC5-S signaling and/or PC5-RRC signaling.

4. The method according to claim 1, wherein the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

5. The method according to any one of claims 2 to 4, wherein performing, according to the identity identifier of the user terminal, the target operation corresponding to the identity identifier of the user terminal, comprises:
in case of a determination that the user terminal is accessing the target relay user terminal using the identity of the remote user terminal, establishing a sidelink communication interface connection with the user terminal; and
in case of a determination that the user terminal is accessing the target relay user terminal using the identity of the relay user terminal, establishing a sidelink communication interface connection with the user terminal, and transmitting an indication message to at least one device of a target network device, a target remote user terminal, or a previous-hop relay user terminal, and/or establishing a sidelink communication interface connection with the user terminal and updating a self-own routing table;
wherein the indication information is used to indicate updating of a corresponding routing table by the target network device, the target remote user terminal, or the previous-hop relay user terminal.

6. The method according to any one of claims 1 to 4, wherein when the user terminal is accessing the target relay user terminal using the identity of the relay user terminal, the connection establishment request message further carries relay capacity indication information of the user terminal, and/or a relay working mode for the user terminal to use after accessing the target relay user terminal.

7. The method according to claim 6, wherein the relay capacity indication information comprises at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

8. The method according to claim 6, further comprising:
determining, according to the relay capacity indication information of the user terminal carried in the connection establishment request message, the relay working mode for the user terminal to use after accessing the target relay user terminal.

9. The method according to claim 8, after determining the relay working mode for the user terminal to use after accessing the target relay user terminal, further comprising:
transmitting to the user terminal a response message corresponding to the connection establishment request message, wherein the response message carries indication information to indicate the relay working mode for the user terminal to use after accessing the target relay user terminal.

10. The accessing method according to claim 6, wherein, the relay working mode comprises at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

11. A user terminal accessing method, **characterized by**: being applied to a user terminal, and comprising:
transmitting a connection establishment request message to a target relay user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

12. The method according to claim 11, before transmitting the connection establishment request message to the target relay user terminal through the sidelink communication interface, further comprising:
determining the target relay user terminal according to the identity of the user terminal.

13. The method according to claim 12, wherein determining the target relay user terminal according to the identity of the user terminal comprises:
when the user terminal is accessing the target relay user terminal using the identity of the remote user terminal, selecting one relay user terminal in relay user terminals satisfying a first preset condition to be the target relay user terminal; or,
when the user terminal is accessing the target relay user terminal using the identity of the relay user terminal, selecting N relay user terminals in relay user terminals satisfying a second preset condition to be the target relay user terminal, wherein N is an integer greater than or equal to 1.

14. The method according to claim 13, wherein the second preset condition comprises at least one of the following:
a relay working mode supported by the user terminal comprises a relay working mode being currently used by the target relay user terminal; or
channel quality of the sidelink communication interface between the user terminal and a relay user terminal is higher than a preset threshold.

15. The method according to claim 11, wherein the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

16. The method according to any one of claims 11 to 15, wherein when the user terminal is accessing the target relay user terminal using the identity of the relay user terminal, the connection establishment request message further carries relay capacity indication information of the user terminal, and/or a relay working mode for the user terminal to use after accessing the target relay user terminal.

17. The method according to claim 16, further comprising:
receiving a relay discovery message broadcast by the target relay user terminal, wherein the relay discovery message carries a relay working mode of the target relay user terminal; and
determining, according to the relay working mode of the target relay user terminal, the relay working mode for the user terminal to use after accessing the target relay user terminal.

18. The method according to claim 11, after determining the relay working mode for the user terminal to use after accessing the target relay user terminal, further comprising:
receiving a response message, transmitted by the target relay user terminal, corresponding to the connection establishment request message, wherein the response message carries indication information to indicate the relay working mode for the user terminal to use after accessing the target relay user terminal.

19. The method according to claim 16, wherein the relay working mode comprises at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

20. The method according to claim 16, wherein the relay capacity indication information comprises at least one of the following:
Layer 2 relay L2 relay;
Layer 3 relay L3 relay;
Layer 2 user terminal to network device relay L2 U2N relay;
Layer 2 user terminal to user terminal relay L2 U2U relay;
Layer 3 user terminal to network device relay L3 U2N relay; or
Layer 3 user terminal to user terminal relay L3 U2U relay.

21. A user terminal accessing apparatus, **characterized by**: being applied to a target relay user terminal, and comprising:
a receiving module, configured to receive a connection establishment request message transmitted by a user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

22. A user terminal accessing apparatus, **characterized by**: being applied to a user terminal, and comprising:
a transmitting module, configured to transmit a connection establishment request message to a target relay user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

23. A target relay user terminal, comprising:
a memory, configured to store a computer program;
a transceiver, configured to receive or transmit data under control of a processor; and
the processor, configured to read the computer program in the memory and perform the following operation:
receiving a connection establishment request message transmitted by a user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

24. The target relay user terminal according to claim 23, wherein the processor is further configured to perform the following operation:
performing, according to the identity identifier of the user terminal, a target operation corresponding to the identity identifier of the user terminal.

25. The target relay user terminal according to claim 23, wherein the connection establishment request message is a PC5 connection establishment request message, the PC5 connection establishment request message comprises PC5-S signaling and/or PC5-RRC signaling.

26. The target relay user terminal according to claim 23, wherein the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the relay user terminal using the identity of the remote user terminal, or accessing the target relay user terminal using the identity of the relay user terminal.

27. The target relay user terminal according to any one of claims 23 to 26, wherein performing, according to the identity identifier of the user terminal, the target operation corresponding to the identity identifier of the user terminal, comprises:
in case of a determination that the user terminal is accessing the target relay user terminal using the identity of the remote user terminal, establishing, through the sidelink communication interface, a sidelink communication connection with the user terminal; and
in case of a determination that the user terminal is accessing the target relay user terminal using the identity of the relay user terminal, establishing a sidelink communication interface connection with the user terminal, and transmitting an indication message to at least one device of a target network device, a target remote user terminal, or a previous-hop relay user terminal, and/or establishing a sidelink communication interface connection with the user terminal and updating a self-own routing table;
wherein the indication information is used to indicate updating of a corresponding routing table by the target network device, the target remote user terminal, or the previous-hop relay user terminal.

28. The target relay user terminal according to any one of claims 23 to 26, wherein when the user terminal is accessing the target relay user terminal using the identity of the relay user terminal, the connection establishment request message further carries relay capacity indication information of the user terminal, and/or a relay working mode for the user terminal to use after accessing the target relay user terminal.

29. The target relay user terminal according to claim 28, wherein the processor is further configured to perform the following operation:
determining, according to the relay capacity indication information of the user terminal carried in the connection establishment request message, the relay working mode for the user terminal to use after accessing the target relay user terminal.

30. A user terminal, comprising:
a memory, configured to store a computer program;
a transceiver, configured to receive or transmit data under control of a processor; and
the processor, configured to read the computer program in the memory and perform the following operation:
transmitting a connection establishment request message to a target relay user terminal through a sidelink communication interface, wherein the connection establishment request message carries an identity identifier of the user terminal, the identity identifier of the user terminal is used to indicate that the user terminal is accessing the target relay user terminal using an identity of a remote user terminal, or accessing the target relay user terminal using an identity of a relay user terminal.

31. The user terminal according to claim 30, wherein the processor is further configured to perform the following operation:
determining the target relay user terminal according to the identity of the user terminal.

32. The user terminal according to claim 31, wherein determining the target relay user terminal according to the identity of the user terminal comprises:
when the user terminal is accessing the target relay user terminal using the identity of the remote user terminal, selecting one relay user terminal in relay user terminals satisfying a first preset condition to be the target relay user terminal; or
when the user terminal is accessing the target relay user terminal using the identity of the relay user terminal, selecting N relay user terminals in relay user terminals satisfying a second preset condition to be the target relay user terminal, wherein N is an integer greater than or equal to 1.

33. The user terminal according to claim 32, wherein the second preset condition comprises at least one of the following:
a relay working mode supported by the user terminal comprises a relay working mode being currently used by the target relay user terminal; or
channel quality of the sidelink communication interface between the user terminal and a relay user terminal is higher than a preset threshold.

34. The user terminal according to claim 30, wherein the connection establishment request message carries indication information to indicate, through a value of the indication information, that the user terminal is accessing the target relay user terminal using the identity of the remote user terminal, or accessing the target relay user terminal using the identity of the relay user terminal;
or, the connection establishment request message selectively carries indication information to indicate, through whether carrying the indication information, that the user terminal is accessing the target relay user terminal using the identity of the remote user terminal, or accessing the target relay user terminal using the identity of the relay user terminal.

35. The user terminal according to any one of claims 30 to 34, wherein when the user terminal is accessing the target relay user terminal using the identity of the relay user terminal, the connection establishment request message further carries relay capacity indication information of the user terminal, and/or a relay working mode for the user terminal to use after accessing the target relay user terminal.

36. The user terminal according to claim 35, wherein the processor is further configured to perform the following operation:
receiving a relay discovery message broadcast by the target relay user terminal, wherein the relay discovery message carries a relay working mode of the target relay user terminal; and
determining, according to the relay working mode of the target relay user terminal, the relay working mode for the user terminal to use after accessing the target relay user terminal.

37. The user terminal according to claim 35, wherein the processor is further configured to perform the following operation:
receiving a response message, transmitted by the target relay user terminal, corresponding to the connection establishment request message, wherein the response message carries indication information to indicate the relay working mode for the user terminal to use after accessing the target relay user terminal.

38. A processor readable storage medium, **characterized by** storing thereon a computer program, wherein the computer program is configured to enable a processor to implement the user terminal accessing method according to any one of claims 1 to 20.

39. A computer program product, comprising a computer program, wherein the computer program, when being executed by a processor, implements the method according to any one of claims 1 to 20.
